# FASCICULE DE BREVET EUROPEEN

(11) **EP 3 134 234 B1**
(45) Date de publication et mention de la délivrance du brevet: **21.03.2018**
(21) Numéro de dépôt: 15725792.4
(22) Date de dépôt: 23.04.2015
(51) Int. Cl.: B25J 15/00, B25J 15/06, B25J 9/16

(54) **PROCÉDÉ ET INSTALLATION DE PRÉHENSION AUTOMATIQUE D'UN OBJET**
VERFAHREN UND ANLAGE ZUM AUTOMATISCHEN GREIFEN EINES OBJEKTS
METHOD AND FACILITY FOR AUTOMATICALLY GRIPPING AN OBJECT

(30) Priorité: 25.04.2014 FR 1453725
(43) Date de publication de la demande: 01.03.2017
(73) Titulaire: Sileane, 42000 Saint-Etienne (FR)
(72) Inventeur: HENRY, Hervé, F-42210 Saint-Cyr-Les-Vignes (FR); SELLA, Florian, F-42600 Chalain le Comtal (FR); BREGIER, Romain, F-38280 Janneyrias (FR)
(74) Mandataire: Cabinet Laurent & Charras
(86) Numéro de dépôt international: PCT/FR2015/051113
(87) Numéro de publication internationale: WO 2015/162390

(56) Documents cités:
- US-A1- 2013 211 593
- US-A1- 2014 031 985
- US-A1- 2014 067 127

## Description

### DOMAINE TECHNIQUE

La présente invention se rapporte au secteur technique de la manipulation d'objets par un système polyarticulé. Par l'expression « système polyarticulé », on entend un système robotisé six axes par exemple.

L'invention concerne plus particulièrement un procédé de préhension automatique d'un objet par un système polyarticulé assujetti à un système de vision.

L'invention trouve une application avantageuse lorsqu'il convient, par exemple, de trier des objets orientés aléatoirement et convoyés les uns après les autres, ou bien lorsqu'il convient par exemple d'extraire un à un des objets issus d'un vrac volumique. Par l'expression « vrac volumique », on entend un amas d'objets, différents ou non, orientés aléatoirement dans un volume.

D'une manière générale, l'invention concerne toutes les applications dans lesquelles il est nécessaire de saisir un objet par l'intermédiaire d'un système polyarticulé.

### ART ANTERIEUR

Il est connu de l'état de la technique, et notamment de la demande de brevet FR 2 987 685, un procédé de commande d'un robot pour le déplacement d'au moins un objet disposé sur un support dans un espace 3D. Ce procédé comprend notamment les étapes :
- d'acquisition d'au moins deux images 2D de l'espace 3D ;
- de segmentation de chaque image 2D précédemment acquise, destinée à extraire de chaque image 2D au moins une primitive géométrique 2D ;
- de recherche de correspondances entre les primitives géométriques 2D extraites d'images 2D distinctes ;
- de calcul des coordonnées d'une primitive géométrique 3D contenue dans l'espace 3D pour chaque groupe de primitives géométriques 2D correspondantes ;
- d'association de chaque primitive géométrique 3D avec un objet connu ;
- de recherche de la position et de l'orientation dans l'espace 3D de chaque objet connu auquel a été associée au moins une primitive géométrique 3D ;
- de déplacement par l'intermédiaire d'un robot d'au moins l'un des objets connus.

Ainsi ce procédé offre la possibilité de détecter, de localiser, et d'orienter des objets dans un espace 3D.

Cependant, ce procédé présente l'inconvénient qu'il ne s'adapte pas à tout type d'objet à déplacer. En effet, ce procédé fonctionne uniquement avec des objets préalablement connus et identifiés par un logiciel d'apprentissage. Ce procédé ne peut pas être appliqué lorsqu'il convient, par exemple, d'isoler un à un des objets inconnus, de natures différentes, et issus d'un vrac volumique. Une telle application consiste par exemple à effectuer une opération de triage d'un amas d'objets.
Le document US 2014/0067127 A1 décrit un procédé et une installation semblable de préhension d'un objet dans une zone de réception par un système polyarticulé assujetti à un système de vision et en plus comprenant deux organes de préhension identiques.

### EXPOSE DE L'INVENTION

L'invention vise à pallier aux inconvénients précités, et à fournir ainsi un procédé de préhension automatique d'un objet inconnu, sans apprentissage préalable de l'objet, et sans apprentissage préalable de la trajectoire de prise dudit l'objet.

L'invention vise également à fournir un procédé permettant, par exemple, de trier des objets orientés aléatoirement, et convoyés les uns après les autres, ou bien d'extraire un à un des objets issus d'un vrac volumique.

A cet effet, il a été mis au point un procédé de préhension automatique, par un système polyarticulé assujetti à un système de vision, d'un objet inconnu situé dans une zone apte à recevoir au moins un objet. Le système polyarticulé comprend au moins deux organes de préhension de types différents, chacun apte à saisir un objet par au moins une zone de prise spécifique dudit objet, et le procédé est remarquable en ce qu'il comprend au moins les étapes consistant à :
- capturer une image de la zone de réception au moyen du système de vision ;
- traiter l'information résultant de l'image et identifier toutes les zones spécifiques que peuvent comporter les objets à saisir, et compatibles avec les organes de préhension ;
- localiser, en position et en orientation, les zones spécifiques compatibles identifiées ;
- choisir l'une des zones spécifiques compatibles localisées et définir automatiquement, pour l'organe de préhension correspondant, une trajectoire de prise de l'objet correspondant, par la zone spécifique compatible choisie ;
- saisir l'objet correspondant selon la trajectoire définie.

Ainsi, le procédé de préhension automatique ne nécessite aucun apprentissage de l'objet à saisir. L'objet peut être quelconque, il suffit uniquement qu'une zone spécifique de l'objet soit détectée et que cette zone soit compatible avec l'organe de préhension du système polyarticulé pour que l'objet soit saisi par cette zone spécifique.

L'objet saisi peut ensuite être traité de toute façon désirée. Il peut par exemple, si le procédé est intégré dans une opération de tri, être disposé dans un bac de réception spécifique.

L'invention concerne toutes les applications dans lesquelles il est nécessaire de saisir un objet par l'intermédiaire d'un système polyarticulé.

Pour trier des objets orientés aléatoirement, et convoyés les uns après les autres, ou bien pour extraire un à un des objets issus d'un vrac volumique, il suffit de recommencer le procédé autant de fois que nécessaire. Après chaque saisie, le procédé reprend la première étape qui consiste à capturer une image de la zone de réception. De cette manière, le procédé s'adapte en temps réel à la zone de réception. En d'autres termes, un objet à saisir qui a été déplacé par la saisie d'un objet précédent sera quand même localisé et saisi.

Le procédé est également avantageux en ce qu'il ne cherche pas à reconnaitre un objet, mais à reconnaitre des zones de prises spécifiques sur les objets à saisir. De cette manière, des objets de différentes tailles, formes ou matières peuvent être saisis par un même organe de préhension et sans nécessiter un apprentissage de l'objet. Il suffit simplement que les objets à saisir présentent des zones spécifiques compatibles avec ledit organe de préhension.

Etant donné que la zone spécifique compatible est localisée, en position et en orientation, le procédé ne nécessite aucun apprentissage sur la trajectoire de prise de l'objet correspondant. La trajectoire de prise est calculée en temps réel, et pour chaque objet à saisir. Le procédé permet alors d'effectuer des opérations de prise et de dépose très rapide d'objets inconnus.

D'une manière avantageuse, le procédé est intelligent et l'étape consistant à choisir l'une des zones spécifiques compatibles localisées, consiste à pondérer chaque zone identifiée avec un coefficient qui est fonction des probabilités de réussites de la saisie par l'organe de préhension correspondant, et de choisir la zone ayant le plus de probabilités de réussites à la saisie.

Le coefficient de pondération peut être fonction de tout type de paramètre, comme par exemple de la distance qui sépare la zone spécifique compatible localisée de l'organe de préhension correspondant. Le coefficient de pondération peut également être calculé en fonction de l'orientation de la zone à saisir. Les probabilités de réussites sont fonction de l'organe de préhension utilisé.

Pour augmenter la vitesse du procédé de préhension, l'étape consistant à définir une trajectoire de prise pour l'organe de préhension, consiste à définir la trajectoire la plus courte et la plus rapide.

La zone de réception définie dans le procédé peut être de tout type. Cette zone peut, par exemple, être constituée par une zone sur un convoyeur, lequel fait défiler un à un des objets à saisir devant le système polyarticulé. Cette zone peut également être fixe, et être constituée par un vrac volumique d'objets à extraire un à un.

Lorsque l'objet à saisir se trouve dans un vrac constitué d'une pluralité d'objets, le procédé peut comprendre, d'une manière avantageuse, une étape consistant à identifier les objets les plus hauts en altitude. Le choix de la zone spécifique localisée peut ensuite se faire parmi les zones localisées sur l'objet identifié comme étant le plus haut.

De cette manière, le procédé évite des tentatives de saisie d'un objet partiellement recouvert par un autre, et dont les chances de réussites à la saisie sont diminuées.

Avantageusement, le procédé comprend une étape consistant, d'une part, à vérifier si l'objet a été saisi par un organe de préhension et, d'autre part, à choisir une autre zone spécifique compatible localisée dans le cas d'un nombre déterminé de tentatives de saisies infructueuses.

De cette manière, le procédé ne peut pas rester bloqué sur un objet qu'un organe de préhension n'arrive pas à saisir. Après un nombre déterminé de tentatives de saisies infructueuses, le procédé passera automatiquement à une autre zone à saisir, sur le même ou sur un autre objet, et avec le même ou un autre organe de préhension.

Selon une forme de réalisation particulière, l'étape du procédé consistant à identifier des zones spécifiques compatibles des objets à saisir, consiste à identifier des zones continues dans le cas où l'organe de préhension est du type ventouse.

Par l'expression « ventouse », on entend aussi bien une ventouse fonctionnant avec une aspiration d'air, qu'une ventouse du type magnétique tel un aimant par exemple. Il est ainsi évident que pour être compatible avec la ventouse, la région continue identifiée doit présenter une région continue comprenant une surface minimum correspondante à la surface active de la ventouse.

Selon une autre forme de réalisation particulière, l'étape du procédé consistant à identifier des zones spécifiques compatibles des objets à saisir, consiste à identifier des arêtes, ou des génératrices, de préférence parallèles, dans le cas où l'organe de préhension est du type pince. Dans cette configuration, il est évident que pour être compatible avec la pince, l'écart maximum entre lesdites arêtes ou génératrices doit être inférieur à l'écartement maximal possible entre des mâchoires de ladite pince.

L'invention concerne également une installation de préhension automatique d'un objet. L'installation comprend un système polyarticulé assujetti à un système de vision, et une zone apte à recevoir au moins un objet à saisir. Le système polyarticulé comprend au moins deux organes de préhension de types différents, chacun apte à saisir un objet par une zone de prise spécifique dudit objet.

Le système de vision est apte à capturer une image de la zone de réception.

Selon l'invention, le système de vision et le système polyarticulé sont assujettis à des moyens de traitement et de calcul aptes, à traiter l'information résultant de l'image capturée, à identifier toutes les zones spécifiques que peuvent comporter les objets à saisir, et compatibles avec les organes de préhension, à localiser, en position et en orientation, les zones spécifiques compatibles identifiées, à choisir l'une des zones spécifiques compatibles localisées, et à définir automatiquement, pour l'organe de préhension correspondant, une trajectoire de prise de l'objet correspondant, par la zone spécifique compatible choisie.

Cette installation est ainsi apte à mettre en oeuvre le procédé selon l'invention et comprend de cette manière tous les avantages susmentionnés dudit procédé.

Selon des formes de réalisation différentes, l'organe de préhension du système polyarticulé peut comprendre au moins une pince et/ou au moins une ventouse.

D'une manière avantageuse, le ou les organes de préhension comprennent des organes élastiques agencés au niveau de la partie desdits organes de préhension qui est destinée à entrer en contact avec l'objet à saisir. Ces organes élastiques ont un comportement souple pour s'adapter à la nature de l'objet à saisir. Ainsi un objet fragile peut être saisi sans être cassé.

### BREVE DESCRIPTION DES DESSINS

D'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective d'une installation de préhension automatique d'un objet selon l'invention ;
- la figure 2 est une représentation schématique en perspectives des organes de préhension du système polyarticulé ;
- la figure 3 est une représentation schématique en perspective d'un organe de préhension du type pince du système polyarticulé ;
- la figure 4 est une représentation schématique en perspective d'un organe de préhension du type ventouse du système polyarticulé.

### EXPOSE DETAILLE DE L'INVENTION

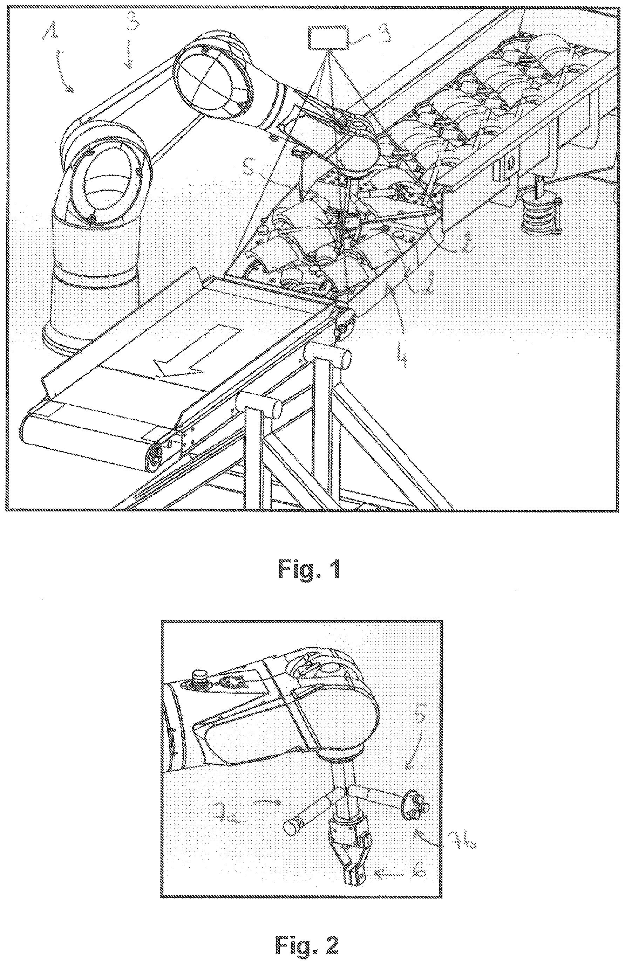

En référence à la figure 1, une installation (1) de préhension automatique d'un objet (2) selon l'invention comprend, un système polyarticulé (3), et une zone de réception (4).

Le système polyarticulé (3) est, par exemple, un robot six axes bien connu de l'état de la technique. Ledit système polyarticulé (3) est apte à saisir un objet (2) par une zone spécifique dudit objet (2). A cet effet, ledit système polyarticulé (3) comprend trois organes de préhension (5), et est assujetti à un système de vision (9).

Les objets (2) à saisir sont disposés aléatoirement en vrac dans la zone de réception (4). Les objets (2) sont par exemple de tailles, de formes, et de natures différentes.

La zone de réception (4) illustrée est constituée par un vrac volumique d'objets (2) à extraire un à un.

En référence à la figure 2, les organes de préhension (5) peuvent être de tout type approprié. L'essentiel réside dans le fait qu'ils sont aptes à saisir un objet (2) par une zone spécifique dudit objet (2). Dans la forme de réalisation illustrée, les organes de préhension (5) se présentent sous la forme d'une pince (6), d'une première ventouse à aspiration (7a), et d'une deuxième ventouse à aspiration (7b).

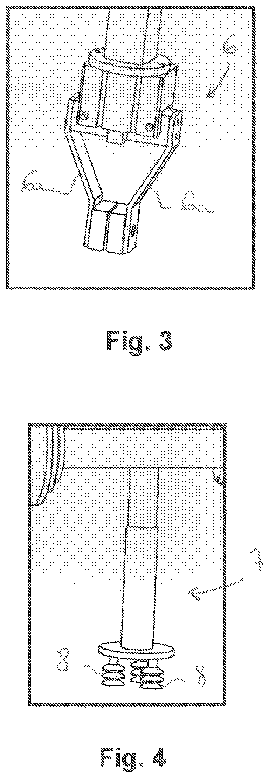

En référence à la figure 3, la pince (6) comprend deux mâchoires (6a) aptes à s'écarter et se rapprocher l'une de l'autre pour saisir un objet (2). Les zones spécifiques d'un objet (2) pouvant être saisies par ladite pince (6) sont des arêtes ou des génératrices, de préférence parallèles. D'une manière évidente, l'écart maximum entre lesdites arêtes ou génératrices doit être inférieur à l'écartement maximal possible entre les mâchoires (6a) de ladite pince (6). Les mâchoires (6a) comprennent avantageusement sur leurs parties destinées à être en contact avec l'objet (2) à saisir, un organe élastique (8) ayant comportement souple pour s'adapter à la nature dudit objet (2) à saisir.

En référence à la figure 4, une ventouse à aspiration (7) est, d'une manière bien connue de l'état de la technique, assujettie à des moyens d'aspiration. Cette ventouse (7) comprend à son extrémité un organe élastique (8) sous forme d'un manchon apte à être appliqué sur une zone spécifique d'un objet (2) pour saisir par aspiration ledit objet (2). Le manchon élastique (8) est destiné à réaliser le contact avec l'objet (2) à saisir. Ce manchon élastique (8) possède un premier niveau de compliance, notamment déterminé pour s'adapter à un certain type d'objet (2) fragile. Ce manchon (8) permet de saisir des objets (2) fragiles sans les casser.

Les zones spécifiques d'un objet (2) pouvant être saisies par une première ventouse (7) sont des régions continues, à savoir des surfaces sensiblement planes et de dimensions aptes à recevoir en appui ledit manchon élastique (8) de la ventouse (7).

Les première et deuxième ventouses (7a, 7b) sont similaires, à l'exception de leurs manchons élastiques (8) qui possèdent des niveaux de compliance différents. La seconde ventouse (7b) est, par exemple, plus grosse que la première (7a), pour être adaptée à des objets (2) plus lourds et moins fragiles.

Le système de vision (9), de préférence disposé au droit de la zone de réception (4), est apte à capturer une image de la zone de réception (4), et peut être de tout type approprié, tel que par exemple une caméra 3D, ou bien une caméra en mode stéréo.

En outre, l'installation (1) comprend des moyens de traitement et de calcul assujettis au système polyarticulé (3) et au système de vision (9).

Ces moyens de traitement et de calcul sont de tout type approprié, et peuvent par exemple se présenter sous la forme d'un microprocesseur.

Ces moyens de traitement et de calcul sont aptes à traiter l'information résultant de l'image capturée de manière à identifier, sur les objets (2) à saisir, des arêtes ou des génératrices, de préférence parallèles, dont l'écart est inférieur à l'écartement maximal des mâchoires (6a) de la pince (6). Ils sont également aptes à identifier, sur les objets (2) à saisir, des surfaces planes dont les dimensions sont aptes à recevoir en appui les manchons élastiques (8) des première ou seconde ventouses (7a, 7b).

Lesdits moyens de traitement et de calcul permettent également de localiser, en position et en orientation, lesdites zones spécifiques compatibles identifiées, et de choisir l'une des zones spécifiques compatibles localisées.

Le choix de la zone à saisir consiste, par exemple, à pondérer chaque zone identifiée avec un coefficient qui est fonction des probabilités de réussites de la saisie par l'organe de préhension correspondant (5), et de choisir la zone ayant le plus de probabilités de réussites à la saisie. En pratique, il s'agit d'affecter des coefficients de pondération pour chaque zone identifiée et compatible, en fonction d'un ou plusieurs paramètres. Les paramètres utilisés peuvent être de toute nature comme par exemple l'altitude de la zone à saisir, l'aire de la surface visible, l'inclinaison d'une zone de saisie. Chaque zone à saisir comprend donc une pondération pour chacun des paramètres choisis. Ensuite on réalise une moyenne de chaque pondération de la zone pour obtenir un score. La zone ayant le plus grand score, ou le plus petit en fonction de la nature de la pondération, est choisie pour être saisie.

Une fois la zone spécifique choisie, par exemple une surface plane pouvant être saisie par l'une des ventouses (7a, 7b), ou bien deux arêtes parallèles pouvant être saisies par la pince (6), lesdits moyens de traitement et de calcul sont aptes à définir automatiquement, pour l'organe de préhension correspondant, une trajectoire de prise de l'objet (2) correspondant par ladite zone spécifique compatible choisie.

L'installation (1) selon l'invention permet donc de mettre en oeuvre un procédé de préhension automatique d'un objet (2) inconnu.

Selon l'invention, le procédé comprend les étapes consistant à :
- capturer une image de la zone de réception (4) au moyen du système de vision (9) ;
- traiter l'information résultant de l'image et identifier toutes les zones spécifiques que peuvent comporter les objets (2) à saisir, et compatibles avec les organes de préhension (5) ;
- localiser, en position et en orientation, les zones spécifiques compatibles identifiées ;
- choisir l'une des zones spécifiques compatibles localisées et définir automatiquement, pour l'organe de préhension correspondant (5), une trajectoire de prise de l'objet (2) correspondant, par la zone spécifique compatible choisie ;
- saisir l'objet (2) correspondant selon la trajectoire définie.

Ce procédé est avantageux en ce qu'il permet de saisir un objet (2) quelconque, sans apprentissage de l'objet (2), ni de la trajectoire de prise dudit objet (2).

Selon l'invention, l'un des organes de préhension (5) peut être favorisé par rapport aux autres. En effet, un ordre de préférence d'utilisation des organes de préhension (5) peut être établi.

A cet effet, si l'on favorise en premier lieu la pince (6), lors du traitement de l'image capturée par le système de vision (9), l'une des zones spécifiques localisées est choisie uniquement parmi celles pouvant être saisies avec ladite pince (6).

Le procédé selon l'invention est avantageux car il permet de réaliser un dévracage d'objets (2) inconnus disposés en vrac, d'une manière automatique et rapide, sans nécessiter l'intervention d'un opérateur, ni d'apprentissage préalable de l'objet (2) ou de la trajectoire de prise de l'objet (2).

Il est évident que le procédé et l'installation (1) selon l'invention peuvent mettre en oeuvre une pluralité de systèmes polyarticulés (3), chacun pouvant être assujetti au même système de vision (9), ou bien chacun pouvant être assujetti à son propre système de vision (9). Ainsi, lorsque l'un des systèmes polyarticulés (3) déplace un objet (2) saisi, un autre système polyarticulé (3) peut, en temps masqué sur le déplacement dudit objet (2) saisi, en saisir un autre, et ainsi de suite. Ceci permet de pouvoir réaliser des opérations de prise et dépose d'objets (2) inconnus d'une manière optimale et rapide. Après avoir été saisi, l'objet (2) peut être traité de toute manière désirée, par exemple être acheminé vers un poste de traitement ou bien déposé dans un bac de réception spécifique.

## Revendications

1. Procédé de préhension automatique, par un système polyarticulé (3) assujetti à un système de vision (9), d'un objet (2) situé dans une zone (4) apte à recevoir au moins un objet (2), ledit système polyarticulé (3) comprenant au moins deux organes de préhension (5) de types différents, chacun apte à saisir un objet (2) par au moins une zone de prise spécifique dudit objet (2) ***caractérisé* en ce qu'**il comprend au moins les étapes consistant à :
- capturer une image de la zone de réception (4) au moyen du système de vision (9) ;
- traiter l'information résultant de l'image et identifier toutes les zones spécifiques que peuvent comporter les objets (2) à saisir, et compatibles avec les organes de préhension (5) ;
- localiser, en position et en orientation, les zones spécifiques compatibles identifiées ;
- choisir l'une des zones spécifiques compatibles localisées et définir automatiquement, pour l'organe de préhension correspondant (5), une trajectoire de prise de l'objet (2) correspondant, par la zone spécifique compatible choisie ;
- saisir l'objet (2) correspondant selon la trajectoire définie.

2. Procédé de préhension automatique d'un objet (2) selon la revendication 1, ***caractérisé* en ce que** l'étape consistant à choisir l'une des zones spécifiques compatibles localisées, consiste à pondérer chaque zone identifiée avec un coefficient qui est fonction des probabilités de réussites de la saisie par l'organe de préhension correspondant (5), et de choisir la zone ayant le plus de probabilités de réussites à la saisie.

3. Procédé de préhension automatique d'un objet (2) selon l'une quelconque des revendications précédentes, ***caractérisé* en ce que** l'étape consistant à définir une trajectoire de prise consiste à définir la trajectoire la plus courte et la plus rapide.

4. Procédé de préhension automatique d'un objet (2) selon l'une quelconque des revendications précédentes, ***caractérisé* en ce que** l'objet (2) à saisir se trouve dans un vrac constitué d'une pluralité d'objets (2) différents à saisir.

5. Procédé de préhension automatique d'un objet (2) selon la revendication 4, ***caractérisé* en ce qu'**il comprend une étape consistant à identifier les objets (2) les plus hauts en altitude, ***et en ce que*** le choix de la zone spécifique localisée se fait parmi les zones localisées sur l'objet (2) identifié comme étant le plus haut.

6. Procédé de préhension automatique d'un objet (2) selon l'une quelconque des revendications précédentes, ***caractérisé* en ce qu'**il comprend une étape consistant, d'une part, à vérifier si l'objet (2) a été saisi par l'un des organes de préhension (5) et, d'autre part, à choisir une autre zone spécifique compatible localisée dans le cas d'un nombre déterminé de tentatives de saisies infructueuses.

7. Procédé de préhension automatique d'un objet (2) selon l'une quelconque des revendications précédentes, ***caractérisé* en ce que** l'étape consistant à identifier des zones spécifiques compatibles des objets (2) à saisir, consiste à identifier des zones continues dans le cas où l'un des organes de préhension (5) est du type ventouse (7).

8. Procédé de préhension automatique d'un objet (2) selon l'une quelconque des revendications précédentes, ***caractérisé* en ce que** l'étape consistant à identifier des zones spécifiques compatibles des objets (2) à saisir, consiste à identifier des arêtes, ou des génératrices, dans le cas où l'un des organes de préhension (5) est du type pince (6), l'écart maximum entre lesdites arêtes ou génératrices devant être inférieur à l'écartement maximal possible entre des mâchoires (6a) de ladite pince (6).

9. Installation (1) de préhension automatique d'un objet (2), ladite installation (1) comprenant une zone (4) apte à recevoir au moins un objet (2) à saisir, et un système polyarticulé (3) assujetti à un système de vision (9) apte à capturer une image de la zone de réception (4), ***caractérisée* en ce que** ledit système polyarticulé (3) comprenant au moins deux organes de préhension (5) de type différents, chacun apte à saisir un objet (2) par une zone de prise spécifique dudit objet (2), ***et en ce que*** ledit système de vision (9) et ledit système polyarticulé (3) sont assujettis à des moyens de traitement et de calcul aptes, à traiter l'information résultant de l'image capturée, à identifier toutes les zones spécifiques que peuvent comporter les objets (2) à saisir, et compatibles avec les organes de préhension (5), à localiser, en position et en orientation, les zones spécifiques compatibles identifiées, à choisir l'une des zones spécifiques compatibles localisées, et à définir automatiquement, pour l'organe de préhension correspondant (5), une trajectoire de prise de l'objet (2) correspondant, par la zone spécifique compatible choisie.

10. Installation (1) de préhension automatique d'un objet (2) selon la revendication 9, ***caractérisée* en ce que** l'un des organes de préhension (5) du système polyarticulé (3) se présente sous la forme d'au moins une pince (6).

11. Installation (1) de préhension automatique d'un objet (2) selon l'une quelconque des revendications 9 et 10, ***caractérisée* en ce que** l'un des organes de préhension (5) du système polyarticulé (3) se présente sous la forme d'au moins une ventouse (7).

12. Installation (1) de préhension automatique d'un objet (2) selon l'une quelconque des revendications 9 à 11, ***caractérisée* en ce que** les organes de préhension (5) comprennent des organes élastiques (8) agencés au niveau de la partie desdits organes de préhension (5) qui est destinée à entrer en contact avec l'objet (2) à saisir, lesdits organes élastiques (8) ayant un comportement souple pour s'adapter à la nature de l'objet (2) à saisir.

## Patentansprüche

1. Verfahren zum automatischen Greifen, über ein Mehrgelenk-System (3), das von einem Sichtsystem (9) abhängt, eines Objektes (2), das sich in einem Bereich (4) befindet, der mindestens ein Objekt (2) aufnehmen kann, dieses Mehrgelenk-System (3) umfasst mindestens zwei Greifelemente (5) mit unterschiedlichem Typ, die jeweils in der Lage sind, ein Objekt (2) über mindestens einen spezifischen Greifbereich dieses Objektes (2) zu ergreifen, **dadurch gekennzeichnet, dass** es mindestens die folgenden Schritte umfasst, die darin bestehen:
- ein Bild des Empfangsbereichs (4) mittels des Sichtsystems (9) aufzunehmen;
- die sich aus dem Bild ergebende Information zu bearbeiten und alle spezifischen Bereiche zu identifizieren, die die zu ergreifenden Objekte (2) enthalten könnten und die mit den Greifelementen (5) kompatibel sind;
- die identifizierten kompatiblen spezifischen Bereiche nach Position und Ausrichtung zu lokalisieren;
- einen dieser lokalisierten kompatiblen spezifischen Bereiche auszuwählen und automatisch, für das entsprechende Greifelement (5) einen Weg zum Ergreifen des entsprechenden Objektes (2) im gewählten kompatiblen spezifischen Bereich zu definieren;
- das entsprechende Objekt (2) gemäß dem definierten Weg zu greifen.

2. Verfahren zum automatischen Greifen eines Objektes (2) gemäß Anspruch 1, **dadurch gekennzeichnet, dass** der Schritt, in dem einer der lokalisierten kompatiblen spezifischen Bereiche ausgewählt wird, darin besteht, jeden identifizierten Bereich mit einem Koeffizienten zu gewichten, der eine Funktion der Erfolgsaussichten zum Ergreifen durch das entsprechende Greifelement (5) ist und den Bereich auszuwählen, bei dem die höchsten Erfolgsaussichten zum Ergreifen bestehen.

3. Verfahren zum automatischen Greifen eines Objektes (2) gemäß einem der vorstehenden Ansprüche, **dadurch gekennzeichnet, dass** der Schritt, in dem ein Greifweg definiert wird, darin besteht, den kürzesten und schnellsten Weg zu definieren.

4. Verfahren zum automatischen Greifen eines Objektes (2) gemäß einem der vorstehenden Ansprüche, **dadurch gekennzeichnet, dass** das zu ergreifende Objekt (2) eines von mehreren verschiedenen zu ergreifenden losen Objekten (2) ist.

5. Verfahren zum automatischen Greifen eines Objektes (2) gemäß Anspruch 4, **dadurch gekennzeichnet, dass** es einen Schritt umfasst, in dem die Objekte (2) mit der größten Höhe identifiziert werden, und dass die Wahl des lokalisierten spezifischen Bereichs unter den am Objekt (2) als höchste identifizierten Bereichen getroffen wird.

6. Verfahren zum automatischen Greifen eines Objektes (2) gemäß einem der vorstehenden Ansprüche, **dadurch gekennzeichnet, dass** es einen Schritt umfasst, der einerseits darin besteht zu prüfen, ob das Objekt (2) von einem der Greifelemente (5) ergriffen wird und andererseits, im Fall einer festgelegten Anzahl vergeblicher Greifversuche, einen anderen lokalisierten, kompatiblen spezifischen Bereich auszuwählen.

7. Verfahren zum automatischen Greifen eines Objektes (2) nach einem der vorstehenden Ansprüche, **dadurch gekennzeichnet, dass** der Schritt, in dem die spezifischen kompatiblen Bereiche der zu ergreifenden Objekte (2) darin besteht, durchgehende Bereiche zu identifizieren, wenn eines der Greifelemente (5) vom Typ Sauger (7) ist.

8. Verfahren zum automatischen Greifen eines Objektes (2) nach einem der vorstehenden Ansprüche, **dadurch gekennzeichnet, dass** der Schritt, in dem spezifische kompatible Bereiche der zu ergreifenden Objekte (2) identifiziert werden, darin besteht, Grate oder Linien zu identifizieren, in dem Fall, dass eines der Greifelemente (5) vom Typ Zange (6) ist, muss der maximale Abstand zwischen diesen Graten oder Linien kleiner sein als der maximal mögliche Abstand zwischen den Backen (6a) dieser Zange (6).

9. Anlage (1) zum automatischen Greifen eines Objektes (2), diese Anlage (1) umfasst einen Bereich (4), der mindestens ein zu ergreifendes Objekt (2) aufnehmen kann, und ein Mehrgelenk-System (3), das von einem Sichtsystem (9) abhängt, das ein Bild des Empfangsbereichs (4) aufnehmen kann **dadurch gekennzeichnet, dass** dieses Mehrgelenk-System (3) mindestens zwei Greifelemente (5) verschiedenen Typs umfasst, von denen jedes in der Lage ist, ein Objekt (2) in einem spezifischen Greifbereich des Objekts (2) zu ergreifen, und dadurch dass dieses Sichtsystem (9) und dieses Mehrgelenk-System (3) von Bearbeitungs- und Rechenmitteln abhängig sind, die in der Lage sind, die Information, die sich aus dem aufgenommenen Bild ergibt, zu bearbeiten und alle spezifischen Bereiche zu identifizieren, die die zu ergreifenden Objekte (2) enthalten könnten und die mit den Greifelementen (5) kompatibel sind, und dazu, die Position und Ausrichtung der identifizierten kompatiblen spezifischen Bereiche zu lokalisieren, und automatisch, für das entsprechende Greifelement (5) einen Weg zum Ergreifen des entsprechenden Objektes (2) im gewählten kompatiblen spezifischen Bereich zu definieren

10. Verfahren zum automatischen Greifen eines Objektes (2) gemäß Anspruch 9, **dadurch gekennzeichnet, dass** eines der Greifelemente (5) des Mehrgelenk-Systems (3) die Form mindestens einer Zange (6) hat.

11. Anlage (1) zum automatischen Greifen eines Objektes (2), nach einem der Ansprüche 9 und 10, **dadurch gekennzeichnet, dass** eines der Greifelemente (5) des Mehrgelenk-Systems (3) die Form mindestens eines Saugers (7) hat.

12. Anlage (1) zum automatischen Greifen eines Objektes (2), nach einem der Ansprüche 9 bis 11, **dadurch gekennzeichnet, dass** die Greifelemente (5) elastische Elemente (8) umfassen, angeordnet in Höhe des Teils dieser Greifelemente (5), der dazu bestimmt ist, in Kontakt mit dem zu ergreifenden Objekt (2) zu kommen, diese elastischen Elemente (8) zeigen ein flexibles Verhalten, um sich an die Art des zu ergreifenden Objektes (2) anzupassen.

## Claims

1. A method of using a polyarticulated system (3) associated with a vision system (9) for automatically picking up an article (2) situated in a zone (4) suitable for receiving at least one article (2), said polyarticulated system (3) including at least two pick-up members (5) of different types, each suitable for taking hold of an article (2) via at least one specific holding zone of said article (2), said method being **characterized in that** it comprises at least the steps consisting in:
- taking an image of the article-receiving zone (4) by means of the vision system (9);
- processing the information resulting from the image and identifying all of the specific zones that are present on the articles (2) to be taken hold of, and that are compatible with the pick-up members (5);
- locating, in position and in orientation, the identified compatible specific zones;
- choosing one of the located compatible specific zones and automatically defining a pick path along which the corresponding pick-up member (5) should take hold of the corresponding article (2) via the chosen compatible specific zone; and
- taking hold of the corresponding article (2) along the defined path.

2. A method of automatically picking up an article (2) according to claim 1, **characterized in that** the step consisting in choosing one of the located compatible specific zones consists in weighting each identified zone with a coefficient that is a function of the probabilities of the zone being successfully taken hold of by the corresponding pick-up member (5), and in choosing the zone that has the highest probabilities of being successfully taken hold of.

3. A method of automatically taking hold of an article (2) according to any preceding claim, **characterized in that** the step consisting in defining a pick path consists in defining the shortest and quickest path.

4. A method of automatically picking up an article (2) according to any preceding claim, **characterized in that** the article (2) to be taken hold of is in a loose pile of a plurality of different articles (2) to be taken hold of.

5. A method of automatically picking up an article (2) according to claim 4, **characterized in that** it further comprises a step consisting in identifying the articles (2) that are at the highest heights, and **in that** the located specific zone is chosen among the zones located on the article (2) that is identified as being the highest.

6. A method of automatically picking up an article (2) according to any preceding claim, **characterized in that** it further comprises a step consisting firstly in checking whether the article (2) has been taken hold of by the pick-up member (5), and secondly in choosing another located compatible specific zone when a determined number of unsuccessful attempts to take hold of the article (2) have been made.

7. A method of automatically picking up an article (2) according to any preceding claim, **characterized in that** the step consisting in identifying compatible specific zones of the articles (2) to be taken hold of consists in identifying continuous zones when the pick-up member (5) is of the suction cup type (7).

8. A method of automatically picking up an article (2) according to any preceding claim, **characterized in that** the step consisting in identifying compatible specific zones of the articles (2) to be taken hold of consists in identifying edges or generator lines, when the pick-up member (5) is of the clamp type (6), the maximum spacing between said edges or generator lines being necessarily less than the maximum possible spacing between the jaws (6a) of said clamp (6).

9. An installation (1) for automatically picking up an article (2), said installation (1) comprising a zone (4) suitable for receiving at least one article (2) to be taken hold of and a polyarticulated system (3) associated with a vision system (9) being suitable for taking an image of the article-receiving zone (4), said installation being **characterized in that** polyarticulated system (3) including at least two pick-up members (5) of different types, each suitable for taking hold of an article (2) via at least one specific holding zone of said article (2) and **in that** said vision system (9) and said polyarticulated system (3) are associated with processing and computation means suitable for processing the information resulting from the taken image, for identifying all of the specific zones that are present on the articles (2) to be taken hold of, and that are compatible with the pick-up members (5), for locating, in position and in orientation, the identified compatible specific zones, and for automatically defining a pick path along which the corresponding pick-up member (5) should take hold of the corresponding article (2) via the chosen compatible specific zone.

10. An installation (1) for automatically picking up an article (2) according to claim 9, **characterized in that** one of the pick-up members (5) of the polyarticulated system (3) is in the form of at least one clamp (6).

11. An installation (1) for automatically picking up an article (2) according to claim 9 or claim 10, **characterized in that** the one of pick-up members (5) of the polyarticulated system (3) is in the form of at least one suction cup (7).

12. An installation (1) for automatically picking up an article (2) according to any one of claims 9 to 11, **characterized in that** the pick-up members (5) are provided with elastically deformable members (8) arranged at the portions of said pick-up members (5) that are designed to come into contact with the article (2) to be taken hold of, said elastically deformable members (8) behaving flexibly so as to adapt to the type of the article (2) to be taken hold of.
